# EUROPÄISCHE PATENTSCHRIFT

(11) **EP 4 350 980 B1**
(45) Veröffentlichungstag und Bekanntmachung des Hinweises auf die Patenterteilung: **18.02.2026**
(21) Anmeldenummer: 22020477.0
(22) Anmeldetag: 03.10.2022
(51) Int. Cl.: F24S 25/00, F24S 25/13, H02S 20/20, H02S 20/24, H02S 30/20

(54) **PHOTOVOLTAIKVORRICHTUNG ZUR MONTAGE AUF EINEM CONTAINER**
PHOTOVOLTAIC DEVICE FOR MOUNTING ON A CONTAINER
DISPOSITIF PHOTOVOLTAÏQUE DESTINÉ À ÊTRE MONTÉ SUR UN CONTENEUR

(43) Veröffentlichungstag der Anmeldung: 10.04.2024
(73) Patentinhaber: Hartl Energy GmbH, 4310 Mauthausen (AT)
(72) Erfinder: Hartl, Alexander, A-4060 Leonding (AT); Hartl, Dominik, A-4320 Allerheiligen im Mühlkreis (AT)
(74) Vertreter: SONN Patentanwälte GmbH & Co KG

(56) Entgegenhaltungen:
- WO-A1-2014/186345
- WO-A1-2016/091711
- CN-U- 204 425 240
- DE-A1- 102017 112 608
- DE-U1- 202012 000 369
- GB-A- 2 463 098
- KR-A- 20120 014 820
- US-A1- 2013 056 991
- US-B1- 8 839 574

## Beschreibung

Die Erfindung betrifft eine Photovoltaikvorrichtung zur Montage auf einem Container.

Die Erfindung betrifft weiters ein Set zum Aufbau einer solchen Photovoltaikvorrichtung sowie einen Container, auf dessen Dach eine Photovoltaikvorrichtung befestigt ist.

Die Veröffentlichung WO 2014/186345 A1 bildet den technischen Hintergrund zum Gegenstand der vorliegenden Erfindung.

Für die Stromversorgung von temporären Behausungen z.B. auf Baustellen werden meist mobile oder stationäre Stromerzeugungsaggregate, insbesondere Dieselaggregate eingesetzt. Solche Stromerzeugungsaggregate ermöglichen ein autonomes bzw. netzunabhängiges Betreiben verschiedener Stromverbraucher in oder in der Umgebung von temporären Behausungen. Nachteilig ist jedoch, dass mit fossilen Energieträgern betriebene Stromerzeugungsaggregate als umweltschädlich betrachtet werden.

Zur autarken elektrischen Energieversorgung sind bereits Versorgungseinrichtungen bekannt geworden, die über wenigstens einen mit regenerativer Energie betriebenen Energiewandler verfügen. Häufig kommen hierbei Photovoltaikmodule zum Einsatz. Es ist bekannt, Photovoltaikmodule auf Dächern verschiedener Bauwerke, wie z.B. Wohnhäusern, Industriegebäuden und dgl. anzuordnen.

Als temporäre Behausungen werden oft Container eingesetzt, die einfach transportierbar sind, modulweise zusammengesetzt werden können und standardisierte Abmessungen aufweisen. Insbesondere werden sog. ISO-Container verwendet, die ursprünglich für Warentransporte Verbreitung gefunden haben. ISO-Container werden häufig aber auch als Baustellencontainer oder als Bürocontainer eingesetzt.

Aus der US 2017/0222598 A1 ist ein Container zur Verwendung als Behausung bekannt geworden, dessen Dach mit Solarpaneelen ausgestattet ist.

Die Anordnung von Photovoltaikmodulen auf Containern ist auch im Zusammenhang mit Energieversorgungsstationen bekannt geworden, bei denen der Container der geschützten Aufbewahrung von elektrischen Komponenten dient, die zum Betrieb der Energieversorgungsstation erforderlich sind, sodass der Containerinnenraum nicht mehr als Behausung oder als Aufenthaltsraum verwendet werden kann.

Bei bisherigen Vorschlägen zur Anordnung von Photovoltaikmodulen auf Containern sind die Module meist fest mit einer Containerwand oder dem Containerdach verbunden oder bilden das Dach aus. Hierbei ist nicht vorgesehen, dass die Photovoltaikmodule bei Bedarf wieder abgenommen werden können. Bei Containern, die der mobilen und/oder temporären Behausung dienen, wie z.B. bei Baustellencontainern oder Bürocontainern, besteht die Anforderung, die Container nur bei Bedarf mit Photovoltaikmodulen auszustatten. Dies erhöht die Flexibilität bei der Einsetzbarkeit von Container, die für vielfältige Einsatzzwecke geeignet sind, von denen nur ein Teil für die Ausstattung mit Photovoltaikmodulen in Frage kommt.

Die vorliegende Erfindung zielt daher darauf ab, ein System zu schaffen, mit dem Containerdächer nur bei Bedarf auf einfache und flexible Weise mit Photovoltaikmodulen ausgestattet werden können. Insbesondere zielt die Erfindung darauf ab, eine Photovoltaikanlage bereitzustellen, welche standardisiert auf Containerdächern montiert und gleichzeitig platzsparend transportiert werden kann.

Zur Lösung dieser Aufgabe stellt die Erfindung gemäß einem ersten Aspekt eine Photovoltaikvorrichtung zur Montage auf einem Container bereit, umfassend wenigstens zwei klappbare Trägermodule, die jeweils zwei relativ zueinander um wenigstens eine Schwenkachse verschwenkbare Trägerelemente aufweisen, wobei an jedem Trägerelement ein Photovoltaikmodul befestigt ist, wobei die wenigstens zwei klappbaren Trägermodule nebeneinander und mit miteinander fluchtenden Schwenkachsen angeordnet und die Trägerelemente benachbarter Trägermodule mit Hilfe von ersten Verbindungsträgern miteinander verbunden sind, wobei die ersten Verbindungsträger parallel zur wenigstens einen Schwenkachse verlaufen und an den der Schwenkachse abgewandten Endbereichen der Trägerelemente an diesen befestigt sind, und wobei an den Trägerelementen der äußersten der wenigstens zwei Trägermodule zweite Verbindungsträger befestigt sind, die zur Ankoppelung an einen Eckbeschlag des Containers ausgebildet sind.

Die Erfindung beruht somit auf der Idee, eine Photovoltaikvorrichtung aus einer Mehrzahl von klappbaren Trägermodulen zusammenzusetzen. Die einzelnen Trägermodule erstrecken sich dabei im Wesentlichen über die Breite des Containers und es können je nach Länge des Containers zwei, drei oder mehr Trägermodule nebeneinander angeordnet werden, um im Wesentlichen die gesamte Länge des Containerdaches abzudecken. Die wenigstens eine Schwenkachse, um welche die beiden Trägerelemente der einzelnen Trägermodule jeweils verschwenkbar sind, verläuft hierbei in Längsrichtung des Containers. Dadurch, dass die beiden Trägerelemente eines Trägermoduls zusammengeklappt werden können, wird ein platzsparender Transport der einzelnen Module ermöglicht. Die Trägermodule sind hierbei bevorzugt derart ausgebildet, dass die Trägerelemente von einer aufeinander liegenden Schwenkposition in eine im Wesentlichen gestreckte Position verschwenkt werden können, d.h. dass die beiden Trägerelemente um ca. 180° relativ zueinander verschwenkbar sind. In der zusammengeklappten Position können die Trägerelemente so aufeinander liegen, dass die Photovoltaikmodule einander zugewandt oder voneinander abgewandt sind.

In der aufgeklappten Schwenkposition können die beiden Trägerelemente eines jeden Trägermoduls in einer gemeinsamen Ebene liegen oder einen stumpfen Winkel miteinander einschließen. Im ersten Fall ergibt sich ein planes Modul, während im zweiten Fall eine giebel- oder satteldachähnliche Ausgestaltung erreicht wird.

Die einzelnen Trägermodule können bevorzugt vor der Montage auf ein Containerdach zur Ausbildung der erfindungsgemäßen Photovoltaikvorrichtung miteinander verbunden werden. Zu diesem Zweck sind erfindungsgemäß erste Verbindungsträger vorgesehen, die parallel zur Schwenkachse verlaufen und an den der Schwenkachse abgewandten Endbereichen der Trägerelemente an diesen befestigt sind. Die ersten Verbindungsträger bilden hierbei eine starre Verbindung zwischen benachbarten Trägerelementen. Die Mehrzahl der auf diese Art und Weise miteinander verbundenen Trägermodule kann mit herkömmlichen Hebevorrichtungen, wie z.B. mit einem Gabelstapler oder einem Kran, auf ein Containerdach gehoben werden, wobei an den äußersten Trägermodulen zweite Verbindungsträger montiert sind, die zur Ankoppelung an einen Eckbeschlag des Containers ausgebildet sind, wofür die zweiten Verbindungsträger in Längsrichtung (das heißt in Richtung der wenigstens einen Schwenkachse) vorstehend ausgebildet und mit den Eckbeschlägen des Containers verbindbar sind.

Auf ebenso einfache Weise kann die erfindungsgemäße Photovoltaikvorrichtung vom Containerdach wieder abgenommen werden, in dem die zweiten Verbindungsträger von den Eckbeschlägen gelöst und die Photovoltaikvorrichtung mit einer Hebevorrichtung vom Containerdach gehoben wird.

Die Erfindung ermöglicht auf Grund des einfachen Auf- und Abbaus und der durch die Klappbarkeit ermöglichten Transportierbarkeit den flexiblen Einsatz von Photovoltaikmodulen auf Containerdächern. Die Container und die erfindungsgemäßen Photovoltaikvorrichtungen können hierbei getrennt voneinander an einen Einsatzort gebracht und die Container je nach Bedarf mit einer Photovoltaikvorrichtung versehen werden.

Um mit einer standardisierten Gestaltung der Trägermodule das Auslangen zu finden und dennoch eine Anpassung an unterschiedliche Abmessungen von Containern zu ermöglichen, sieht eine bevorzugte Weiterbildung der Erfindung vor, dass die Trägerelemente senkrecht zur Schwenkachse aus- und einfahrbare Arme aufweisen, an denen die ersten Verbindungsträger befestigt sind. Die aus- und einfahrbaren Arme können beispielsweise als telekopierbare Arme ausgebildet sein. Auf diese Weise kann eine stufenlose Anpassung an die Containerbreite erfolgen.

Eine vorteilhafte Konstruktion der Trägerelemente sieht vor, dass die Trägerelemente jeweils einen Rahmen zur Abstützung des Photovoltaikmoduls aufweisen, wobei der Rahmen zwei im Wesentlichen senkrecht zur Schwenkachse verlaufende Arme und einen die der Schwenkachse abgewandten Endbereiche der Arme verbindenden Querträger aufweist.

Um die Montage der ersten Verbindungsträger an den Trägerelementen zu erleichtern, kann vorgesehen sein, dass die Trägerelemente jeweils zwei in Richtung der Schwenkachse voneinander beabstandete Verbindungsstücke tragen.

Die Verbindungsstücke sind vorteilhafterweise an den aus- und einfahrbaren Armen befestigt.

In bevorzugter Weise ragen die Verbindungsstücke über den von der Schwenkachse abgewandten Rand des Photovoltaikmoduls, sodass die daran befestigten ersten Verbindungsträger einen seitlichen Rand der erfindungsgemäßen Photovoltaikvorrichtung ausbilden und gleichzeitig Auflageelemente zur Auflage der Photovoltaikvorrichtung auf dem Containerdach ausbilden.

In diesem Zusammenhang ist bevorzugt vorgesehen, dass die ersten Verbindungsträger und ggf. die zweiten Verbindungsträger eine ebene Auflagefläche zur Auflage auf dem Dach des Containers aufweisen.

Um eine einfache Montage der erfindungsgemäßen Photovoltaikvorrichtung am Containerdach zu ermöglichen, weisen die zweiten Verbindungsträger an ihren freien Enden bevorzugt jeweils ein Befestigungsstück zur formschlüssigen Verbindung mit dem Eckbeschlag des Containers auf. Die Befestigung am Containerdach erfolgt vorzugsweise nur an den Eckbeschlägen, sodass zusätzliche Befestigungspunkte entfallen können.

Die Eckbeschläge von Containern sind meist standardisiert ausgeführt, sodass die Befestigungsstücke einheitlich ausgeführt werden können. Weit verbreitet sind bei ISO-Container Eckbeschläge, die für eine sogenannte Twistlock-Verbindung ausgebildet sind. Bei Befestigungsstücken für eine Twistlock-Verbindung wird die formschlüssige Verbindung durch eine Drehung eines Teils des Befestigungsstücks verriegelt. Eine bevorzugte Weiterbildung der Erfindung sieht in diesem Zusammenhang vor, dass das Befestigungsstück ein drehbares Verriegelungsglied aufweist, welches ausgebildet ist, um in eine Öffnung des Eckbeschlags eingeführt zu werden und die Öffnung nach einer Drehung formschlüssig zu hintergreifen.

Die Befestigungsstücke können weiters ein Angriffselement für eine Hebevorrichtung, wie z.B. einen Kran aufweisen, sodass der Container mit der Hebevorrichtung aufgehoben und an einen anderen Ort verbracht werden kann. Die Hebevorrichtung ergreift den Container hierbei an allen vier Befestigungsstücken so wie dies ohne Anordnung der Photovoltaikvorrichtung sonst durch direkte Ankoppelung an die Eckbeschläge der Fall wäre.

Der Container ist bevorzugt als Standard-Container, wie z.B. ISO-Container, wie z.B. als 20', 30' oder 40' (' = Fuß) ISO-Container, ausgebildet.

Zur Umwandlung des von den Photovoltaikmodulen bereitgestellten Gleichstroms in Wechselstrom ist wenigstens ein Wechselrichter vorgesehen. Je nach technischer Auslegung kann für jedes Photovoltaikmodul ein eigener Wechselrichter verwendet werden oder ein Wechselrichter auch für mehrere Photovoltaikmodule vorgesehen sein. Der oder die Wechselrichter kann bzw. können bevorzugt an der Unterseite des Photovoltaikmodul angeordnet sein. Der oder die Wechselrichter kann bzw. können bevorzugt an den Querträgern der Trägerelemente befestigt sein. Im Falle einer Mehrzahl von Wechselrichtern werden deren Ausgänge zusammengefasst und mit einer Anschlussbox verbunden. Die Anschlussbox kann an einem der Befestigungsstücke montiert werden. Von der Anschlussbox können beliebige elektrische Verbraucher mit Wechselstrom versorgt werden. Insbesondere kann der Container, d.h. die im Container angeordneten Verbraucher, mit Wechselstrom versorgt werden. Die Anschlussbox ist mit vorzugsweise standardisierten Steckverbindungen (z.B. CEE Kupplungen) ausgestattet.

Gemäß einem zweiten Aspekt stellt die Erfindung ein Set zum Aufbau einer Photovoltaikvorrichtung gemäß dem ersten Aspekt bereit, umfassend wenigstens zwei klappbare Trägermodule, die jeweils zwei relativ zueinander um eine Schwenkachse verschwenkbare Trägerelemente aufweisen, wobei an jedem Trägerelement ein Photovoltaikmodul befestigt ist, eine Mehrzahl von ersten Verbindungsträgern zur Verbindung der Trägerelemente benachbarter Trägermodule, und zweite Verbindungsträger, die zur Ankoppelung an einen Eckbeschlag des Containers ausgebildet sind.

Die klappbaren Trägermodule können hierbei in zusammengeklapptem Zustand übereinander gestapelt werden und gemeinsam mit den anderen Teilen des Sets in einer Transportbox aufgenommen sein, wodurch ein platzsparender Transport ermöglicht wird.

Gemäß einem dritten Aspekt stellt die Erfindung einen Container bereit, auf dessen Dach eine Photovoltaikvorrichtung gemäß dem ersten Aspekt befestigt ist.

Wie bereits im Zusammenhang mit dem ersten Aspekt der Erfindung erwähnt, erfolgt die Befestigung der Photovoltaikvorrichtung auf dem Containerdach bevorzugt dadurch, dass die zweiten Verbindungsträger der Photovoltaikvorrichtung an Eckbeschlägen des Containers befestigt sind.

Das Befestigungsstück der zweiten Verbindungsträger kann hierbei formschlüssig mit dem jeweiligen Eckbeschlag verbunden sein.

Die Erfindung wird nachfolgend anhand eines in der Zeichnung schematisch dargestellten Ausführungsbeispiels näher erläutert.

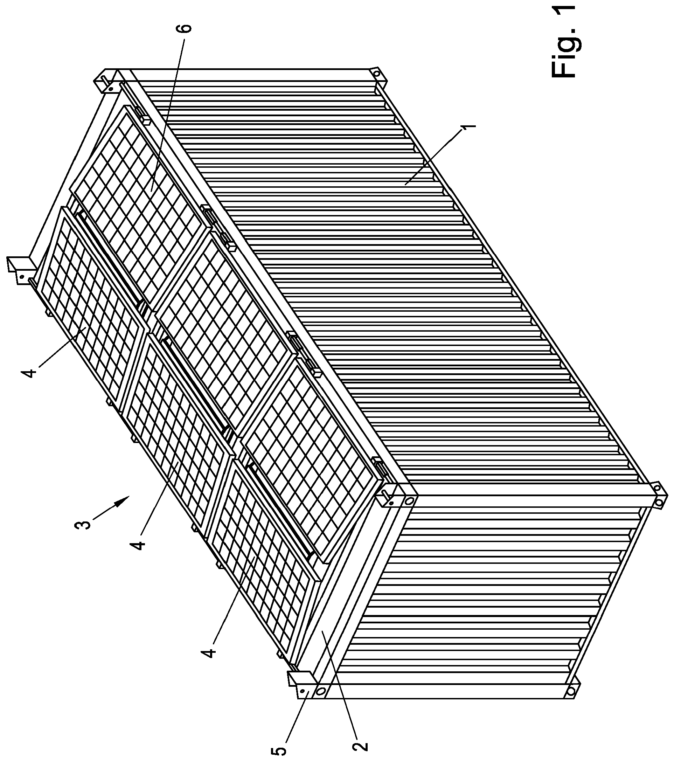

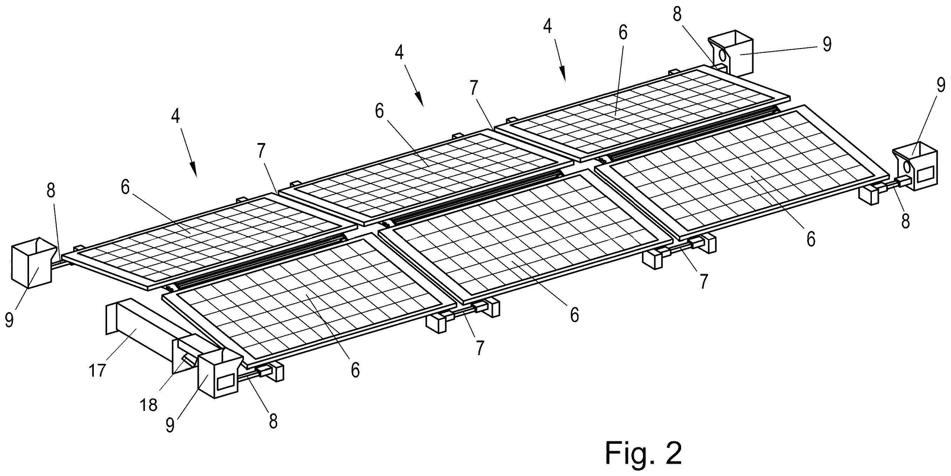

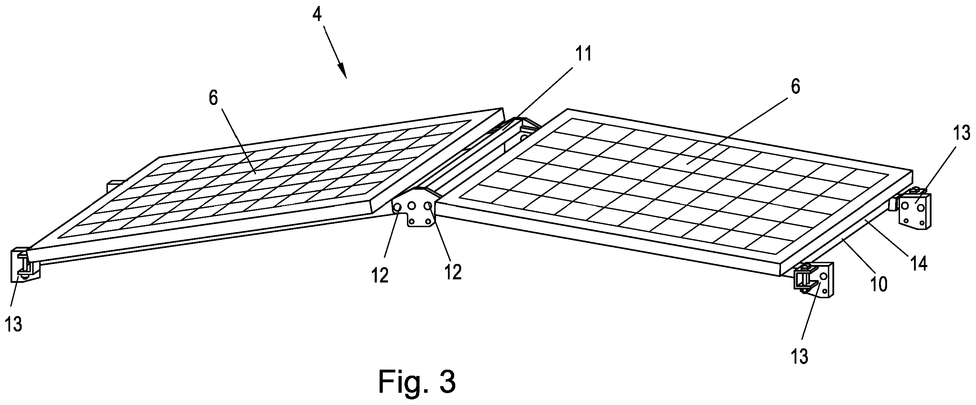

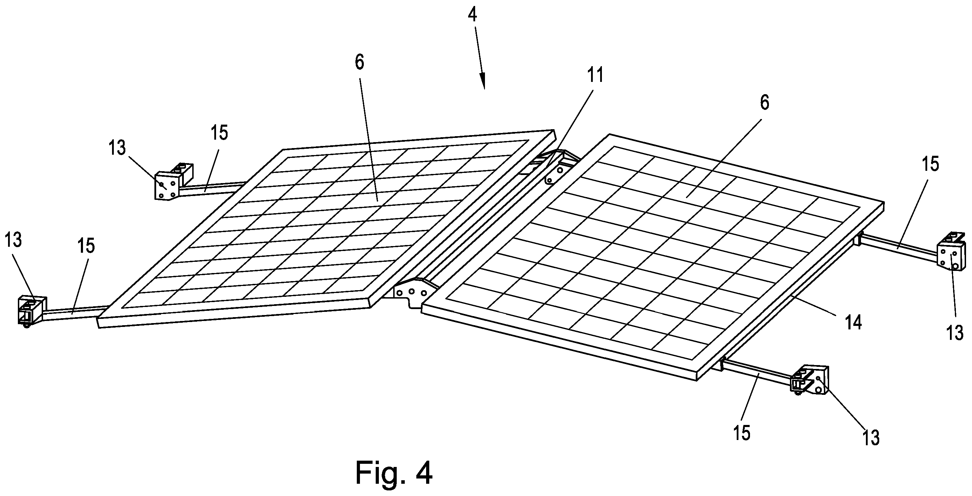

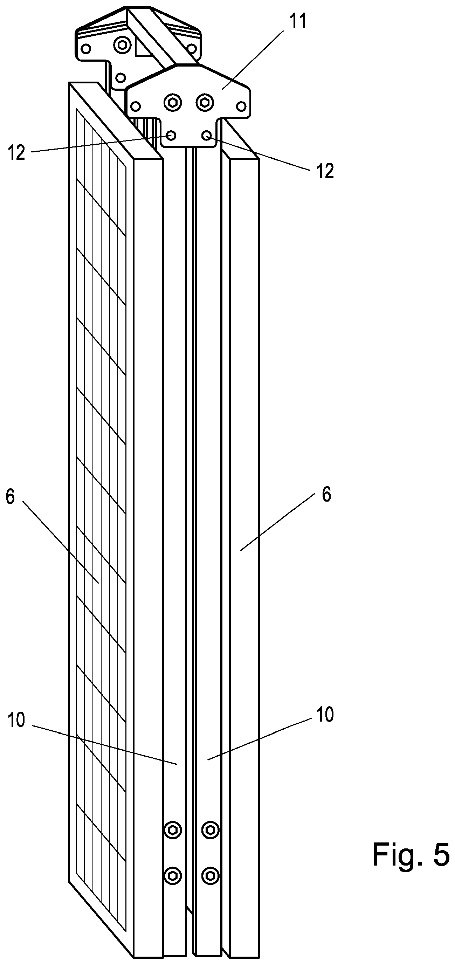

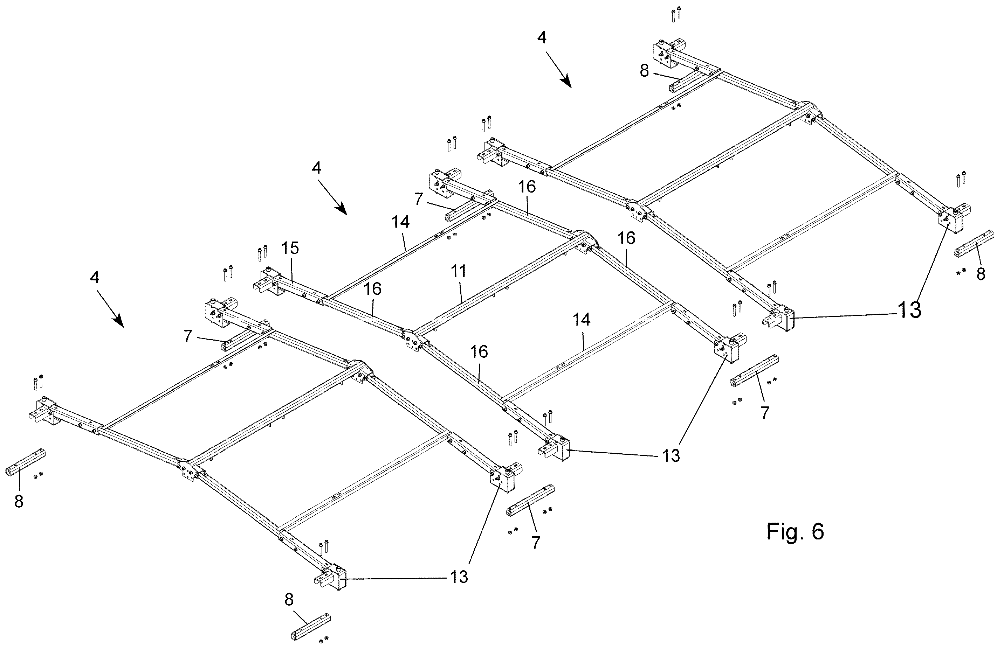

In dieser zeigen Fig. 1 eine erfindungsgemäße Photovoltaikvorrichtung auf einem Containerdach, Fig. 2 die Photovoltaikvorrichtung von Fig. 1 ohne Container, Fig. 3 ein Trägermodul der Photovoltaikvorrichtung von Fig. 1, Fig. 4 ein Trägermodul mit ausgefahrenen Armen, Fig. 5 ein Trägermodul im zusammengeklappten Zustand und Fig. 6 eine Explosionsdarstellung der der Photovoltaikvorrichtung von Fig. 1 ohne Photovoltaikmodule.

In Fig. 1 ist ein ISO-Container 1 dargestellt, der auf seinem Dach 2 eine Photovoltaikvorrichtung 3 trägt. Die Photovoltaikvorrichtung 3 ist aus drei in Längsrichtung aneinandergereihten Trägermodulen 4 zusammengesetzt und an den Eckbeschlägen 5 des Containers 1 befestigt. Jedes Trägermodul 4 trägt zwei Photovoltaikmodule 6.

In Fig. 2 ist ersichtlich, dass benachbarte Trägermodule 4 jeweils mit zwei ersten Verbindungsträgern 7 miteinander verbunden sind und dass die außenliegenden Trägermodule 4 jeweils in Längsrichtung nach außen vorstehende zweite Verbindungsträger 8 aufweisen, die an ihren freien Enden Befestigungsstücke 9 tragen, mit denen die Photovoltaikvorrichtung 1 mit den Eckbeschlägen 5 formschlüssig verbunden werden kann. Die Befestigungsstücke 9 können hierbei als Twistlock-Verbindungsstücke ausgebildet sein. Weiters ist in Fig. 2 eine elektrische Anschlussbox 17 dargestellt, in welcher die Ausgänge der den einzelnen Photovoltaikmodulen 6 oder einer Gruppe von Photovoltaikmodulen 6 zugeordneten Wechselrichter (nicht gezeigt) zusammengefasst werden. Die Anschlussbox 17 kann an jedem der vier Befestigungsstücke 9 montiert sein. Von der Anschlussbox 17 kann dann der Container 1 mit Wechselstrom versorgt werden. Die Anschlussbox 17 ist mit standardisierten Steckverbindungen 18 (z.B. CEE Kupplungen) ausgestattet.

In Fig. 3 ist ein Trägermodul 4 gesondert dargestellt und es ist ersichtlich, dass das Trägermodul 4 zwei relativ zueinander verschwenkbare Trägerelemente 10 umfasst, von denen jedes ein Photovoltaikmodul 6 trägt. Hierbei sind die Trägerelemente 10 an einem Mittelstück 11 jeweils um eine Schwenkachse 12 schwenkbar gelagert. An einem Querträger 14 des Trägerelements 10 sind an den beiden Endbereichen Verbindungsstücke 13 befestigt, an welchen die ersten Verbindungsträger 7 bzw. die zweiten Verbindungsträger 8 montiert werden.

Bei der Ausbildung gemäß Fig. 4 sind die Verbindungsstücke 13 an teleskopierbaren Armen 15 angeordnet, um eine Anpassung an unterschiedliche Containerbreiten zu ermöglichen.

In Fig. 5 ist das Trägermodul 4 in zusammengeklapptem Zustand dargestellt, wobei die beiden Trägerelemente 10 aneinander liegen und die Photovoltaikmodule 6 an voneinander abgewandten Seiten des zusammengeklappten Trägermoduls 4 zu liegen kommen.

In der Explosionsdarstellung gemäß Fig. 6 ist der konstruktive Aufbau der Trägerelemente 10 besser ersichtlich. Jedes der drei Trägerelemente 10 umfasst einen Rahmen zur Abstützung des Photovoltaikmoduls **6,** wobei der Rahmen zwei im Wesentlichen senkrecht zu den Schwenkachsen 12 verlaufende Arme 16 und einen die der Schwenkachse 12 abgewandten Endbereiche der Arme 16 verbindenden Querträger 14 aufweist.

## Patentansprüche

1. Photovoltaikvorrichtung (3) zur Montage auf einem Container (1), umfassend wenigstens zwei klappbare Trägermodule (4), die jeweils zwei relativ zueinander um zumindest eine Schwenkachse (12) verschwenkbare Trägerelemente (10) aufweisen, wobei an jedem Trägerelement (10) ein Photovoltaikmodul (6) befestigt ist, **dadurch gekennzeichnet, dass** die wenigstens zwei klappbaren Trägermodule (4) nebeneinander und mit miteinander fluchtenden Schwenkachsen (12) angeordnet und die Trägerelemente (10) benachbarter Trägermodule (4) mit Hilfe von ersten Verbindungsträgern (7) miteinander verbunden sind, wobei die ersten Verbindungsträger (7) parallel zur wenigstens einen Schwenkachse (12) verlaufen und an den der Schwenkachse (12) abgewandten Endbereichen der Trägerelemente (10) an diesen befestigt sind, und wobei an den Trägerelementen (10) der äußersten der wenigstens zwei Trägermodule (4) zweite Verbindungsträger (8) befestigt sind, die zur Ankoppelung an einen Eckbeschlag (5) des Containers (1) ausgebildet sind.

2. Photovoltaikvorrichtung nach Anspruch 1, **dadurch gekennzeichnet, dass** die Trägerelemente (10) senkrecht zur Schwenkachse (12) aus- und einfahrbare Arme (15) aufweisen, an denen die ersten Verbindungsträger (7) befestigt sind.

3. Photovoltaikvorrichtung nach Anspruch 1 oder 2, **dadurch gekennzeichnet, dass** die Trägerelemente (10) jeweils einen Rahmen zur Abstützung des Photovoltaikmoduls (6) aufweisen, wobei der Rahmen zwei im Wesentlichen senkrecht zur Schwenkachse (12) verlaufende Arme (16) und einen die der Schwenkachse (12) abgewandten Endbereiche der Arme (16) verbindenden Querträger (14) aufweist.

4. Photovoltaikvorrichtung nach Anspruch 1, 2 oder 3, **dadurch gekennzeichnet, dass** die Trägerelemente (10) jeweils zwei in Richtung der Schwenkachse (12) voneinander beabstandete Verbindungsstücke (13) tragen.

5. Photovoltaikvorrichtung nach Anspruch 4, **dadurch gekennzeichnet, dass** die Verbindungsstücke (13) an den aus- und einfahrbaren Armen (15) befestigt sind.

6. Photovoltaikvorrichtung nach Anspruch 4 oder 5, **dadurch gekennzeichnet, dass** die Verbindungsstücke (13) über den von der Schwenkachse (12) abgewandten Rand des Photovoltaikmoduls (6) vorragen.

7. Photovoltaikvorrichtung nach einem der Ansprüche 1 bis 6, **dadurch gekennzeichnet, dass** die ersten Verbindungsträger (7) und ggf. die zweiten Verbindungsträger (8) eine ebene Auflagefläche zur Auflage auf dem Dach (2) des Containers (1) aufweisen.

8. Photovoltaikvorrichtung nach einem der Ansprüche 1 bis 7, **dadurch gekennzeichnet, dass** die zweiten Verbindungsträger (8) an ihren freien Enden ein Befestigungsstück (9) zur formschlüssigen Verbindung mit dem Eckbeschlag (5) des Containers (1) aufweisen.

9. Photovoltaikvorrichtung nach Anspruch 8, **dadurch gekennzeichnet, dass** das Befestigungsstück (9) ein drehbares Verriegelungsglied aufweist, welches ausgebildet ist, um in eine Öffnung des Eckbeschlags (5) eingeführt zu werden und die Öffnung nach einer Drehung formschlüssig zu hintergreifen.

10. Set zum Aufbau einer Photovoltaikvorrichtung (3) nach einem der Ansprüche 1 bis 9, umfassend wenigstens zwei klappbare Trägermodule (4), die jeweils zwei relativ zueinander um wenigstens eine Schwenkachse (12) verschwenkbare Trägerelemente (10) aufweisen, wobei an jedem Trägerelement (10) ein Photovoltaikmodul (6) befestigt ist, eine Mehrzahl von ersten Verbindungsträgern (7) zur Verbindung der Trägerelemente (10) benachbarter Trägermodule (4), und zweite Verbindungsträger (8), die zur Ankoppelung an einen Eckbeschlag (5) des Containers (1) ausgebildet sind.

11. Container (1), auf dessen Dach (2) eine Photovoltaikvorrichtung (3) nach einem der Ansprüche 1 bis 9 befestigt ist.

12. Container nach Anspruch 11, **dadurch gekennzeichnet, dass** die zweiten Verbindungsträger (8) der Photovoltaikvorrichtung (3) an Eckbeschlägen (5) des Containers (1) befestigt sind.

13. Container nach Anspruch 11 oder 12, **dadurch gekennzeichnet, dass** das Befestigungsstück (13) der zweiten Verbindungsträger (8) formschlüssig mit dem jeweiligen Eckbeschlag (5) verbunden ist.

14. Container nach Anspruch 11, 12 oder 13, **dadurch gekennzeichnet, dass** die ersten Verbindungsträger (7) auf dem Dach (2) des Containers (1) aufliegen.

## Claims

1. A photovoltaic device (3) for mounting on a container (1), comprising at least two foldable carrier modules (4), which each have two support elements (10) pivotable relative to one another about at least one pivot axis (12), a photovoltaic module (6) being fastened to each support element (10), **characterized in that** the at least two foldable carrier modules (4) are arranged adjacent to one another and with their pivot axes (12) aligned with one another, and the support elements (10) of adjacent carrier modules (4) are connected to one another by means of first connecting supports (7), wherein the first connecting supports (7) extend parallel to the at least one pivot axis (12) and are fastened to the support elements (10) at the end regions thereof remote from the pivot axis (12), and wherein second connecting supports (8) are fastened to the support elements (10) of an outermost one of the at least two carrier modules (4), which second connecting supports (8) are designed for coupling to a corner fitting (5) of the container (1).

2. The photovoltaic device according to claim 1, **characterized in that** the support elements (10) have arms (15) which can be extended and retracted perpendicularly to the pivot axis (12) and to which the first connecting supports (7) are attached.

3. The photovoltaic device according to claim 1 or 2, **characterized in that** the support elements (10) each have a frame for supporting the photovoltaic module (6), the frame having two arms (16) running essentially perpendicular to the pivot axis (12) and a cross member (14) connecting end regions of the arms (16) facing away from the pivot axis (12).

4. The photovoltaic device according to claim 1, 2 or 3, **characterized in that** the support elements (10) each carry two connecting pieces (13) spaced apart from one another in the direction of the pivot axis (12).

5. The photovoltaic device according to claim 4, **characterized in that** the connecting pieces (13) are attached to the extendable and retractable arms (15).

6. The photovoltaic device according to claim 4 or 5, **characterized in that** the connecting pieces (13) project beyond an edge of the photovoltaic module (6) facing away from the pivot axis (12).

7. The photovoltaic device according to any one of claims 1 to 6, **characterized in that** the first connecting supports (7) and, if applicable, the second connecting supports (8) have a flat bearing surface for bearing on the roof (2) of the container (1).

8. The photovoltaic device according to any one of claims 1 to 7, **characterized in that** the second connecting supports (8) have at their free ends a fastening piece (9) for positive connection to the corner fitting (5) of the container (1).

9. The photovoltaic device according to claim 8, **characterized in that** the fastening piece (9) comprises a rotatable locking member configured to be inserted into an opening of the corner fitting (5) and to positively engage behind the opening after rotation.

10. A set for assembling a photovoltaic device (3) according to any one of claims 1 to 9, comprising at least two foldable carrier modules (4), each of which has two support elements (10) pivotable relative to one another about at least one pivot axis (12), wherein a photovoltaic module (6) is fastened to each carrier element, a plurality of first connecting supports (10) for connecting the support elements (10) of adjacent carrier modules (4), and second connecting supports which are designed for coupling to a corner fitting (5) of the container (1).

11. A container (1), on the roof (2) of which a photovoltaic device (3) according to any one of claims 1 to 9 is mounted on.

12. The container according to claim 11, **characterized in that** the second connecting supports (8) of the photovoltaic device (3) are attached to corner fittings (5) of the container (1).

13. The container according to claim 11 or 12, **characterized in that** the fastening piece (13) of the second connecting supports (8) is positively connected to the respective corner fitting (5).

14. The container according to claim 11, 12 or 13, **characterized in that** the first connecting supports (7) rest on the roof (2) of the container (1).

## Revendications

1. Dispositif photovoltaïque (3) destiné à être monté sur un conteneur (1), comprenant au moins deux modules de support pliables (4), chacun comportant deux éléments de support (10) pivotants l'un par rapport à l'autre autour d'au moins un axe de pivotement (12), un module photovoltaïque (6) étant fixé sur chaque élément de support (10), **caractérisé en ce que** les au moins deux modules de support pliables (4) sont disposés côte à côte avec des axes de pivotement (12) mutuellement alignés , et les éléments de support (10) des modules de support adjacents (4) sont reliés entre eux à l'aide de premiers supports de liaison (7), lesdits premiers supports de liaison (7) s'étendant parallèlement à l'au moins un axe de pivotement (12) et étant fixés aux éléments de support (10) dans les zones d'extrémité opposées à l'axe de pivotement (12), et **en ce que** des seconds supports de liaison (8) sont fixés aux éléments de support (10) des modules de support les plus externes (4) des au moins deux modules de support, ces seconds supports de liaison (8) étant configurés pour être solidarisés avec un raccord d'angle (5) du conteneur (1).

2. Dispositif photovoltaïque selon la revendication 1, **caractérisé en ce que** les éléments de support (10) comportent des bras (15) extensibles et rétractables perpendiculairement à l'axe de pivotement (12), sur lesquels sont fixés les premiers supports de liaison (7).

3. Dispositif photovoltaïque selon la revendication 1 ou 2, **caractérisé en ce que** les éléments de support (10) comprennent chacun un cadre pour soutenir le module photovoltaïque (6), le cadre comprenant deux bras (16) s'étendant essentiellement perpendiculairement à l'axe de pivotement (12) et une traverse (14) reliant les zones d'extrémité des bras (16) opposées à l'axe de pivotement (12).

4. Dispositif photovoltaïque selon la revendication 1, 2 ou 3, **caractérisé en ce que** les éléments de support (10) portent chacun deux pièces de liaison (13) espacées l'une de l'autre dans la direction de l'axe de pivotement (12).

5. Dispositif photovoltaïque selon la revendication 4, **caractérisé en ce que** les pièces de liaison (13) sont fixées aux bras extensibles et rétractables (15).

6. Dispositif photovoltaïque selon la revendication 4 ou 5, **caractérisé en ce que** les pièces de liaison (13) dépassent au-delà du bord du module photovoltaïque (6) opposé à l'axe de pivotement (12).

7. Dispositif photovoltaïque selon l'une quelconque des revendications 1 à 6, **caractérisé en ce que** les premiers supports de liaison (7) et, le cas échéant, les seconds supports de liaison (8) présentent une surface d'appui plane pour reposer sur le toit (2) du conteneur (1).

8. Dispositif photovoltaïque selon l'une quelconque des revendications 1 à 7, **caractérisé en ce que** les seconds supports de liaison (8) comportent à leurs extrémités libres une pièce de fixation (9) pour une liaison par complémentarité de forme avec le raccord d'angle (5) du conteneur (1).

9. Dispositif photovoltaïque selon la revendication 8, **caractérisé en ce que** la pièce de fixation (9) comprend un élément de verrouillage rotatif conçu pour être inséré dans une ouverture du raccord d'angle (5) et pour s'engager par complémentarité de forme derrière l'ouverture après une rotation.

10. Kit pour l'assemblage d'un dispositif photovoltaïque (3) selon l'une quelconque des revendications 1 à 9, comprenant au moins deux modules de support pliables (4), chacun comportant deux éléments de support (10) pivotants l'un par rapport à l'autre autour d'au moins un axe de pivotement (12), un module photovoltaïque (6) étant fixé sur chaque élément de support (10), une pluralité de premiers supports de liaison (7) pour relier les éléments de support (10) des modules de support adjacents (4), et des seconds supports de liaison (8) configurés pour être solidarisés avec un raccord d'angle (5) du conteneur (1) .

11. Conteneur (1) sur le toit (2) duquel est fixé un dispositif photovoltaïque (3) selon l'une quelconque des revendications 1 à 9.

12. Conteneur selon la revendication 11, **caractérisé en ce que** les seconds supports de liaison (8) du dispositif photovoltaïque (3) sont fixés aux raccords d'angle (5) du conteneur (1).

13. Conteneur selon la revendication 11 ou 12, **caractérisé en ce que** la pièce de fixation (13) des seconds supports de liaison (8) est reliée par complémentarité de forme au raccord d'angle (5) respectif.

14. Conteneur selon la revendication 11, 12 ou 13, **caractérisé en ce que** les premiers supports de liaison (7) reposent sur le toit (2) du conteneur (1).
